Europäisches Patentamt

European Patent Office

Office européen des brevets

(11) Numéro de publication: **0 349 427**
**A1**

# (12) DEMANDE DE BREVET EUROPEEN

(21) Numéro de dépôt: **89401855.5**

(22) Date de dépôt: **28.06.89**

(51) Int. Cl.⁵: **G 06 F 13/36**

(30) Priorité: **01.07.88 FR 8808965**

(43) Date de publication de la demande:
**03.01.90 Bulletin 90/01**

(84) Etats contractants désignés:
**BE DE ES GB GR IT LU NL**

(71) Demandeur: **ELECTRONIQUE SERGE DASSAULT**
**55, quai Marcel Dassault**
**F-92214 Saint-Cloud (FR)**

(72) Inventeur: **Valembois, Jean-Marie**
**16, rue Guynemer**
**F-92380 Garches (FR)**

(74) Mandataire: **Plaçais, Jean-Yves et al**
**Cabinet Netter 40, rue Vignon**
**F-75009 Paris (FR)**

(54) **Dispositif d'interface électronique entre une mémoire partagée et une pluralité d'utilisateurs.**

(57) Le dispositif comprend une première connexion (CN1) vers une pluralité d'utilisateurs (UA,UB,UC) et une deuxième connexion (CN2) vers le port d'accès d'une mémoire vive de travail (MT). Il comprend, en outre, une mémoire d'attribution d'accès (MAA) possédant N cellules (CEL), une entrée de configuration (EC) propre à recevoir un jeu d'informations (JI) définissant une séquence d'au plus N droits d'accès à la mémoire de travail pour certains au moins des utilisateurs, et des moyens de commande (MC) capables de charger la mémoire d'attribution d'accès (MAA) par la séquence de droit d'accès présente sur l'entrée de configuration, puis d'explorer ensuite, séquentiellement et cycliquement, la mémoire d'attribution d'accès en attribuant à chaque fois un droit d'accès à l'usager désigné par la cellule courante de cette mémoire d'attribution d'accès.

FIG.1

## Description

### Dispositif d'interface électronique entre une mémoire partagée et une pluralité d'utilisateurs

L'invention concerne l'accès à une mémoire vive possédant un port d'accès par une pluralité d'utilisateurs.

Dans un système informatique, dans lequel une mémoire vive de travail est partagée en une pluralité de zones allouées respectivement à la pluralité d'utilisateurs, il peut être nécessaire, pour des raisons de performance, que tous ces utilisateurs puissent avoir accès en parallèle et quasi-simultanément à la mémoire de travail.

Bien sûr, une mémoire de travail possédant une pluralité de ports d'accès résout totalement ce problème. Cependant, de telles mémoires sont, d'une part, limitées à quelques ports seulement (généralement deux), plus rarement trois en composants discrets et exceptionnellement jusqu'à cinq en composants intégrés, et d'autre part, ont toujours une capacité très limitée par rapport à celle des mémoires à port d'accès unique.

Un premier but de l'invention est donc de permettre l'accès quasi-simultané de plusieurs utilisateurs à une mémoire vive possédant un port d'accès sans conflit d'accès.

Généralement, l'échange d'information entre un utilisateur et la mémoire de travail s'effectue par grains. Chaque grain est un ensemble de mots et va nécessiter un nombre plus ou moins important de cycles d'accès à la mémoire en fonction du nombre de mots du grain, un mot entier étant transmis à chaque cycle d'accès.

La durée d'échange d'un grain entre un utilisateur et la mémoire dépend également des durées d'échange des grains des autres utilisateurs avec cette mémoire puisque ceux-ci dialoguent quasi-simultanément. Cependant, toujours pour des raisons de performance de système, il se peut qu'un utilisateur ait la nécessité d'échanger tout un grain en un seul cycle d'accès sans devoir attendre la durée normale d'échange et sans pour autant pénaliser le dialogue entre les autres utilisateurs et la mémoire de travail.

Un autre but de l'invention et donc de permettre l'échange quasi-immédiat d'un grain entier entre un utilisateur ayant en moyenne un faible besoin d'échange et la mémoire vive de travail.

La présente invention a donc pour objet un dispositif d'interface électronique entre une mémoire vive de travail, possédant un port d'accès, et une pluralité d'utilisateurs, ledit dispositif comprenant une première connexion vers la pluralité d'utilisateurs et une deuxième connexion vers le port d'accès, caractérisé en ce qu'il comprend, en outre :
- une mémoire d'attribution d'accès possédant N cellules,
- une entrée de configuration propre à recevoir un jeu d'informations définissant une séquence d'au plus N droits d'accès à la mémoire de travail pour certains au moins desdits utilisateurs, et
- des moyens de commande capables de charger la mémoire d'attribution d'accès par la séquence de droit d'accès présente sur l'entrée de configuration, puis d'explorer ensuite, séquentiellement et cycliquement, la mémoire d'attribution d'accès en attribuant à chaque fois un droit d'accès à l'usage désigné par la cellule courante de cette mémoire d'attribution d'accès,
moyennant quoi les utilisateurs peuvent accéder quasi-simultanément à la mémoire de travail sans conflit d'accès.

Dans un mode de réalisation, les première et deuxième connexions sont prévues pour un milieu de communication synchrone et les accès ont une durée identique et constante reliée à la période de travail du milieu de communication synchrone.

Selon un mode de fonctionnement préféré, il est prévu que les moyens de commande explorent cycliquement la mémoire d'attribution d'accès jusqu'à la réception d'un nouveau jeu d'informations définissant une autre séquence de droit d'accès.

De préférence, les moyens de commande débutent l'exploration cyclique de la mémoire d'attribution d'accès en réponse à un signal logique de fin de chargement de la mémoire d'attribution d'accès, puis le début d'un nouveau cycle d'exploration peut être effectué en réponse à un signal logique représentatif de la fin du cycle d'exploration précédent.

Dans un mode de réalisation préféré, les moyens de commande comprennent un compteur variant d'un pas à partir d'une première valeur de référence jusqu'à une deuxième valeur de référence, la différence des deux valeurs de référence étant égale au nombre N de droits d'accès diminiué d'une unité, la valeur courante du compteur désignant la cellule courante de la mémoire.

Avantageusement, les moyens de commande comprennent une logique de commande délivrant le signal logique de fin de chargement ou le signal logique représentatif de la fin d'un cycle d'exploration, lorsque le compteur atteint sa deuxième valeur de référence.

Avantageusement, la séquence de droit d'accès comprend N informations de droit d'accès, le chargement de la séquence de droit d'accès comprenant alors avantageusement le chargement de chaque information de droit d'accès dans la cellule courante de la mémoire d'attribution d'accès, tandis que l'attribution d'un droit d'accès à un utilisateur comprend avantageusement la délivrance par la mémoire d'attribution d'accès de l'information de droit d'accès contenue dans la cellule courante, et la variation du compteur est alors effectuée après ledit chargement ou après ladite délivrance de chaque information de droit d'accès.

Selon un mode de fonctionnement, la logique de commande force la valeur du compteur à la première valeur de référence en présence du signal logique de fin de chargement ou en présence du signal logique représentatif de la fin d'un cycle d'exploration.

Dans un mode de fonctionnement préféré, le jeu d'informations comprend en outre une indication du nombre de droit d'accès, la première valeur de référence du compteur dépendant alors de cette indication et la variation du compteur étant alors, de préférence, une décrémentation.

Les moyens de commande comprennent également, de préférence, un registre contenant la première valeur de référence.

Ces moyens de commande comprennent également avantageusement une sortie d'attribution d'accès vers la pluralité d'utilisateurs, prévue pour un autre milieu de communication, les moyens de commande pouvant alors attribuer un droit d'accès à l'utilisateur désigné par l'émission d'un signal de droit d'accès sur cet autre milieu de communication.

Lorsque la mémoire de travail est divisée en une pluralité de fragments distincts, le dispositif selon l'invention peut comprendre en outre des moyens de gestion de ces fragments, disposés entre les première et deuxième connexions.

Cet ensemble de gestion peut être avantageusement du type de celui dans décrit dans la Demande de brevet français au nom de la Demanderesse déposée le même jour que la présente Demande et concernant "un dispositif de mémoire vive électronique".

Pour permettre l'échange rapide d'un grain entier entre un utilisateur et la mémoire de travail, cet utilisateur peut comprendre une mémoire-cache et la durée d'accès de cet utilisateur à la mémoire de travail est alors avantageusement consacrée à l'écriture et/ou à la lecture dans cette mémoire-cache.

D'autres avantages et caractéristiques de l'invention apparaîtront à l'examen de la description détaillée ci-après et des dessins annexés sur lesquels :

- la figure 1 est un synoptique schématique d'un mode de réalisation d'un dispositif selon l'invention ;
- la figure 2 est un synoptique schématique de moyens de commande du dispositif de la figure 1 ;
- la figure 3 est un synoptique schématique d'une autre partie du dispositif de la figure 1 ;
- la figure 4 illustre un jeu d'informations définissant une séquence de droit d'accès ;
les figures 5 et 5A illustrent un premier mode de fonctionnement du dispositif de la figure 1 ; et
les figures 6 et 6A illustrent un deuxième mode de fonctionnement du dispositif de la figure 1.

Les dessins comportant, pour l'essentiel, des éléments de caractère certain font partie intégrante de la description. Il en est de même pour la Demande de brevet français au nom de la Demanderesse déposée le même jour que la présente Demande et concernant "un dispositif de mémoire vive électronique". En conséquence, les dessins annexés ainsi que la Demande de brevet français concernant le "dispositif de mémoire vive électronique" pourront servir non seulement à mieux faire comprendre la description détaillée ci-après mais également contribuer, le cas échéant, à la définition de l'invention.

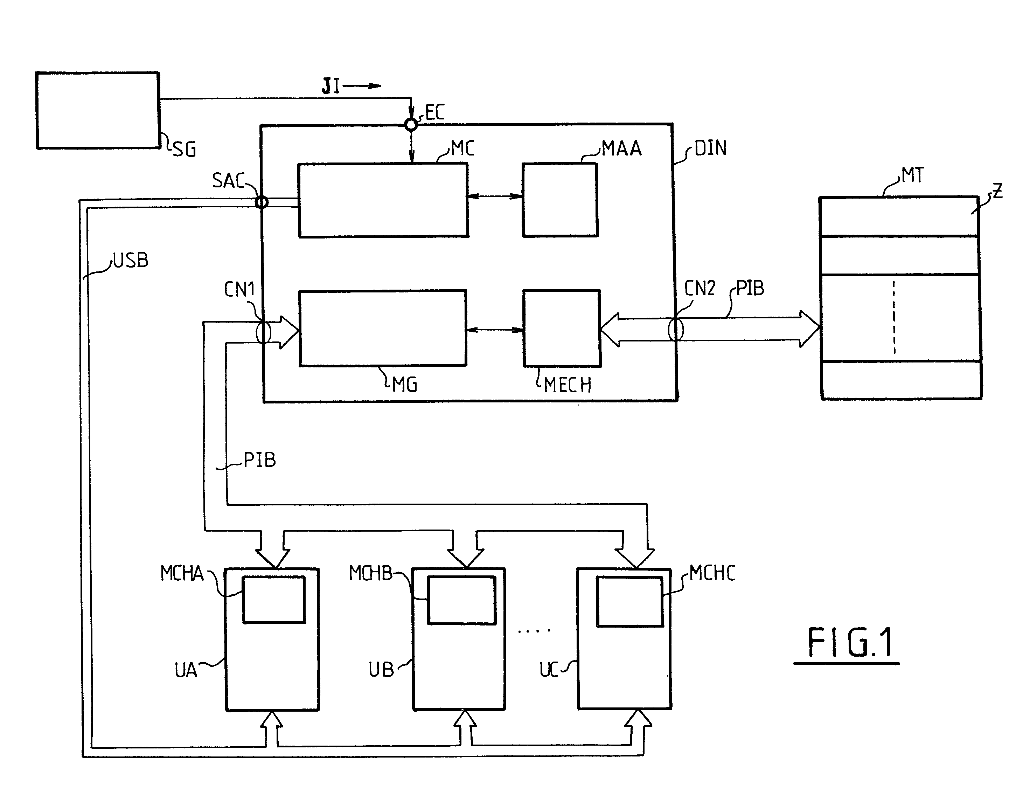

Si l'on se réfère à la figure 1, on voit que le dispositif selon l'invention DIN comporte une première connexion CN1 reliée à une pluralité d'utilisateurs UA,UB,UC par un milieu de communication synchrone PIB. Pour des raisons de simplicité, on n'a représenté ici que trois utilisateurs.

Le dispositif d'interface DIN comporte également une deuxième connexion CN2 reliée, par une autre partie du milieu de communication PIB à un port d'accès (non représenté) d'une mémoire vive de travail MT partagée en une pluralité de zones distinctes allouées respectivement à la pluralité d'utilisateurs.

Entre les première et deuxième connexions CN1,CN2 sont disposés des moyens de gestion MG de ces différentes zones Z ainsi que des moyens d'échange entre les moyens de gestion et le port d'accès.

Le dispositif DIN comprend également une entrée de configuration EC propre à recevoir, notamment de la part d'un superviseur général SG d'un système informatique dans lequel est inséré le dispositif DIN, un jeu d'informations JI dont la signification sera donnée ci-après. Cette entrée de configuration EC est reliée à des moyens de commande MC interagissant avec une mémoire d'attribution d'accès MAA, et reliés par l'intermédiaire d'une sortie d'attribution d'accès SAC à un autre milieu de communication USB relié également à la pluralité d'utilisateurs UA,UB,UC.

Chacun des utilisateurs UA,UB,UC dispose d'une mémoire-cache MCHA,MCHB,MCHC reliée au milieu de communication synchrone PIB.

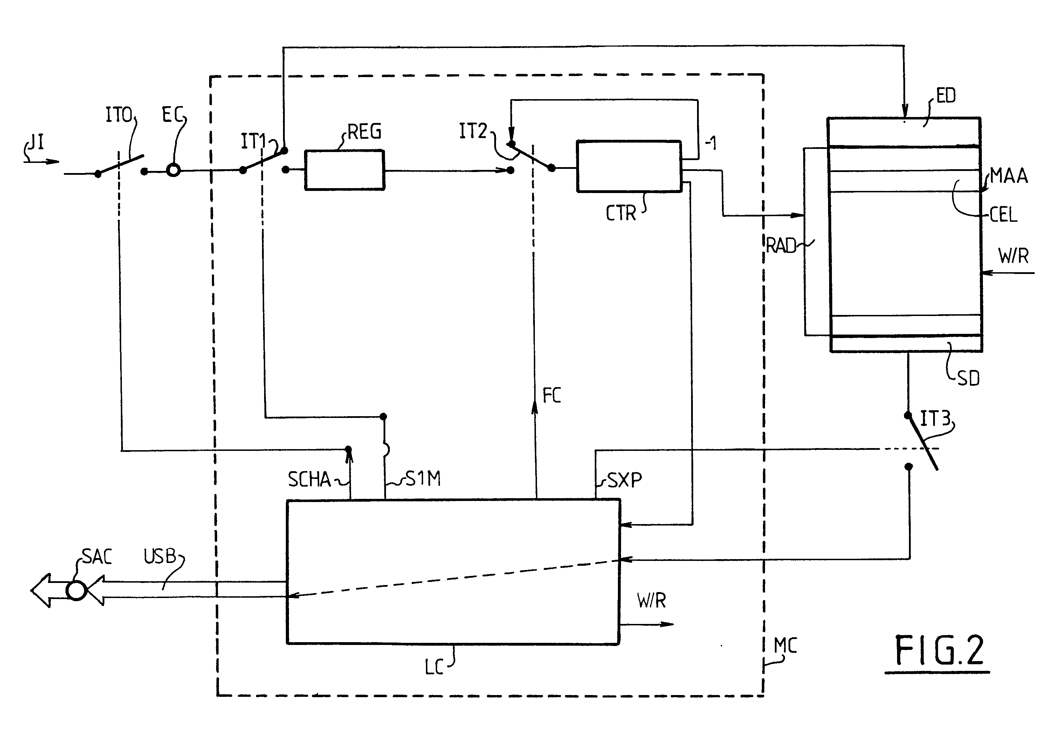

La figure 2 illustre, de façon plus détaillée, les moyens de commande MC ainsi que la mémoire d'attribution d'accès MAA. Sur cette figure, les différents interrupteurs représentés le sont dans la position qu'ils occupent lorsque le signal de commande qui les actionne a la valeur "faux". Ces différents interrupteurs ne sont représentés qu'à des fins d'illustrer des interruptions ou des non-interruptions de liaison entre les différents constituants de cette figure. Ils ne préjugent donc en rien de la réalisation matérielle de ces fonctions d'interruption, celles-ci pouvant être notamment réalisées de façon logicielle.

La mémoire d'attribution d'accès MAA comporte N cellules CEL, identifiées chacune par une adresse. Cette mémoire MAA comporte également un registre d'adresses RAD ainsi qu'une entrée de données ED et une sortie de données SD.

L'entrée de configuration EC est reliée par l'intermédiaire d'un interrupteur IT1 soit à l'entrée de données ED de la matrice MAA, soit à l'entrée d'un registre REG. La sortie de ce registre REG est susceptible d'être reliée par un interrupteur IT2 à l'entrée d'un compteur CTR. Lorsque cette entrée de compteur n'est pas reliée à la sortie du registre REG, elle est reliée à la sortie du compteur CTR, cette liaison illustrant une décrémentation d'un pas du compteur. La sortie de ce compteur CTR est également reliée d'une part au registre d'adresses RAD de la mémoire MAA et, d'autre part, à une logique de commande LC.

Cette logique de commande est susceptible d'émettre un signal logique de chargement SCHA permettant la réception sur l'entrée de configuration EC du jeu d'informations JI, en commandant l'interrupteur IT0 situé en amont de cette entrée de configuration. La logique de commande est également propre à émettre un signal logique S1M, représentatif de la réception de la première information du jeu d'information JI et commandant l'interrupteur IT1. La signification de cette première information sera donnée ci-après.

Cette logique de commande est enfin propre à émettre un signal logique SXP représentatif de l'exploration de la mémoire d'attribution d'accès MAA, un signal logique de fin de cycle FC du compteur CTR, commandant l'interrupteur IT2, ainsi qu'un signal de commande d'écriture ou de lecture W/R de la mémoire d'attribution d'accès MAA.

Le signal SXP commande un interrupteur IT3 qui, lorsqu'il est dans sa position fermée, relie la sortie de données SD de la mémoire d'attribution d'accès MAA à la sortie d'attribution d'accès SAC par l'intermédiaire de la logique de commande LC.

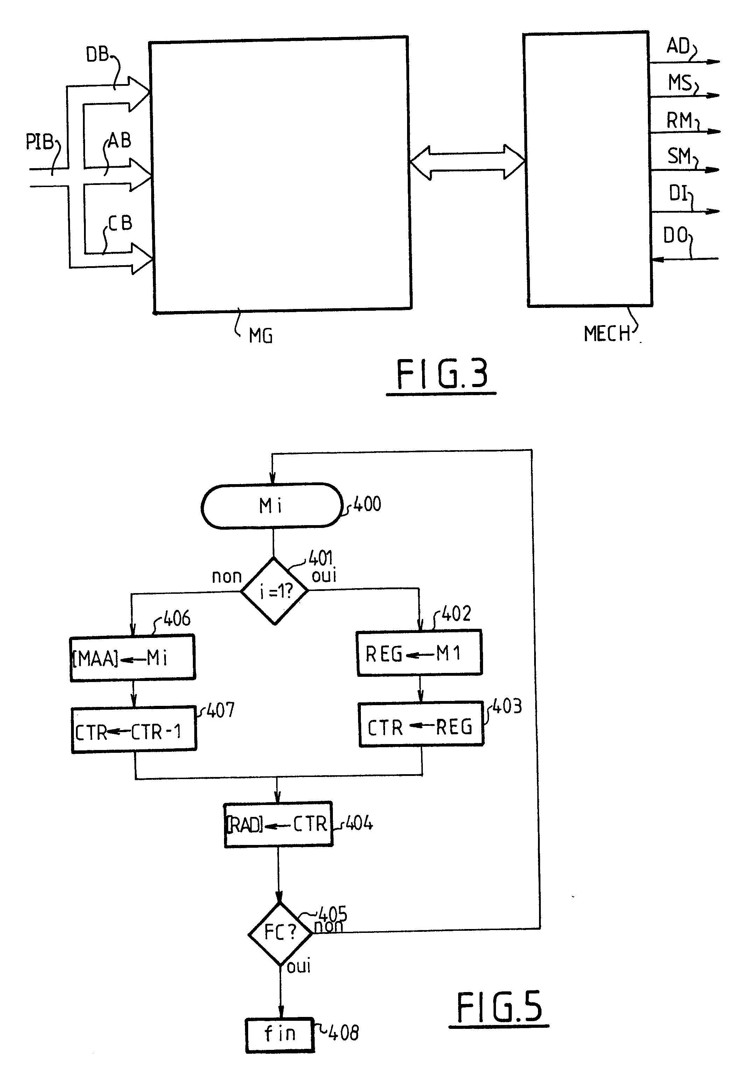

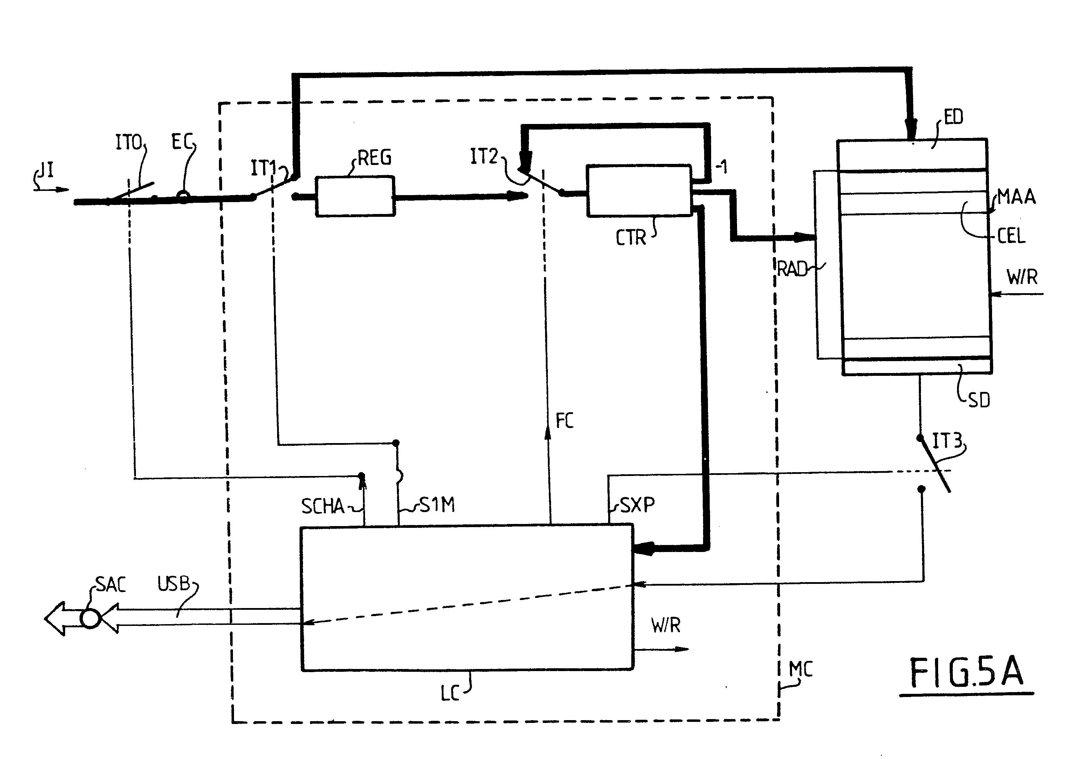

Il est maintenant fait référence à la figure 3 pour décrire les moyens de gestion des différentes zones mémoire de la mémoire de travail ainsi que les moyens d'échange MECH avec cette mémoire de travail. En fait, la mémoire de travail MT est divisée en une pluralité de fragments distincts comprenant un nombre prédéterminé de mots. Selon l'application de l'utilisateur, le besoin de celui-ci en nombre de fragments est plus ou moins important. Une zone allouée à l'utilisateur est donc un nombre plus ou moins élevé de fragments.

Le milieu de communication synchrone, généralement un bus classique, comprend une partie DB consacrée aux données échangées, une partie AB destinée à l'adressage des zones et une partie CB destinée à la commande de ces zones. Il convient de remarquer ici que la partie du bus PIB destinée à l'adressage n'est nécessaire que dans le cas où l'accès de l'utilisateur à la zone qui lui est allouée s'effectue de façon aléatoire, c'est-à-dire dans le cas où il est nécessaire de préciser, par un adressage, quels fragments ou quelles parties de fragments de cette zone on utilise. Par contre, dans le cas où les fragments d'une zone sont organisés en liste ou chaîne de type PEPS (Premier Entré, Premier Sorti ou encore communément appelé en langue anglaise FIFO : first in, first out), ou bien de type DEPS (Dernier Entré, Premier Sorti, ou bien communément appelé en langue anglaise LIFO : last in, first out), ou bien encore de type liste ou chaîne circulaire, la partie AB du bus PIB n'est plus nécessaire.

Il est rappelé que l'écriture dans une liste PEPS s'effectue successivement à partir du premier fragment jusqu'au dernier et la lecture s'effectue également à partir du premier fragment jusqu'au dernier. Dans une chaîne DEPS, l'écriture s'effectue également à partir du premier fragment jusqu'au dernier mais la lecture s'effectue à partir du dernier fragment jusqu'au premier. Dans une liste circulaire, le dernier fragment a comme fragment suivant le premier fragment.

Dans ce cas, les moyens de gestion peuvent comprendre un dispositif du type de celui décrit dans la Demande de brevet français précité concernant "un dispositif de mémoire vive électronique".

Si l'on suppose donc que la mémoire de travail MT est subdivisée en M fragments ayant respectivement chacun une identification, les moyens de gestion MG peuvent comprendre :
- une première mémoire auxiliaire à M cellules auxiliaires,
- un premier registre d'index propre à désigner respectivement chacune des M cellules auxiliaires, chaque index étant déterminable de façon bi-univoque à partir d'une identification,
- un pointeur de sortie et un pointeur d'entrée parcourant le premier registre suivant une boucle fermée de sens prédéterminé,
- des moyens d'initialisation propres à remplir cette première mémoire auxiliaire par la suite d'identification ainsi qu'à pré-positionner les deux pointeurs sur le même index,
- des moyens d'attribution propres à répondre à une requête d'attribution d'un premier ensemble de p fragments en incrémentant séquentiellement de p pas le pointeur de sortie, la sortie de la première mémoire auxiliaire délivrant séquentiellement les p identifications respectives des p fragments attribués,
- des moyens de chaînage recevant les p identifications et chaînant les p fragments les uns aux autres selon un ordre dépendant de la nature dudit premier ensemble,
- des moyens d'accès propres à répondre à une requête d'accès à un deuxième ensemble de r fragments chaînés en délivrant successivement, selon l'ordre du chaînage, les r identifications successives des r fragments,
- des moyens de libération propres à répondre à une requête de libération d'un troisième ensemble de q fragments chaînés, en désignant successivement les q identifications et en autorisant à chaque fois l'écriture de l'identification désignée dans la cellule auxiliaire de la première mémoire auxiliaire identifiée par l'index correspondant au pointeur d'entrée et en incrémentant ensuite le pointeur d'entrée. Ainsi, les contenus des cellules auxiliaires de la première mémoire auxiliaire comprise, suivant ladite boucle, entre le pointeur de sortie inclus et le pointeur d'entrée exclu désignent l'ensemble des fragments libres de ladite mémoire de travail.

Avantageusement, les moyens de chaînage comprennent :
- une deuxième mémoire auxiliaire à au moins M emplacements, et,
- un deuxième registre d'index propre à désigner respectivement chacun des M emplacements. Les moyens d'attribution relient la sortie de la première mémoire auxiliaire d'une part au deuxième registre d'index, et d'autre part, à partir du deuxième fragment du premier ensemble, à l'entrée de la deuxième mémoire auxiliaire. Ils autorisent alors, à partir du deuxième fragment du premier ensemble, le stockage de l'identification du fragment de rang i dans l'emplacement de la deuxième mémoire auxiliaire, identifié par l'index disponible en sortie du deuxième registre d'index et correspondant avec l'identification du fragment de rang i-1.

Lorsqu'une zone est du type DEPS, les moyens de chaînage des moyens de gestion sont propres à effectuer un premier chaînage des p fragments, destiné à être utilisé pour un travail d'écriture dans le premier ensemble et un deuxième chaînage des p fragments, inverse du premier chaînage, destiné à être utilisé pour un travail de lecture dans le premier ensemble. Pour ce faire, les moyens de chaînage comprennent une troisième mémoire auxiliaire à au moins M cases.

Pour obtenir de plus amples détails concernant une telle réalisation de moyens de gestion, l'homme de l'art pourra se référer à la Demande de brevet français précitée dont le contenu, ainsi qu'il a été précisé ci-avant, fait partie intégrante de la présente description.

Les moyens d'échange MECH, représentés sur la figure 3, réalisent en fait un simple interface entre les moyens de gestion MG et le port d'accès de la mémoire de travail MT et délivrent des informations d'adresses AD, un signal de sélection MS de la mémoire de travail MT, un signal RM permettant la lecture dans la mémoire de travail MT, un signal SM permettant l'écriture dans la mémoire de travail MT et reçoivent les informations de données DI vers la mémoire de travail ainsi que les informations de données DO en provenance de la mémoire de travail.

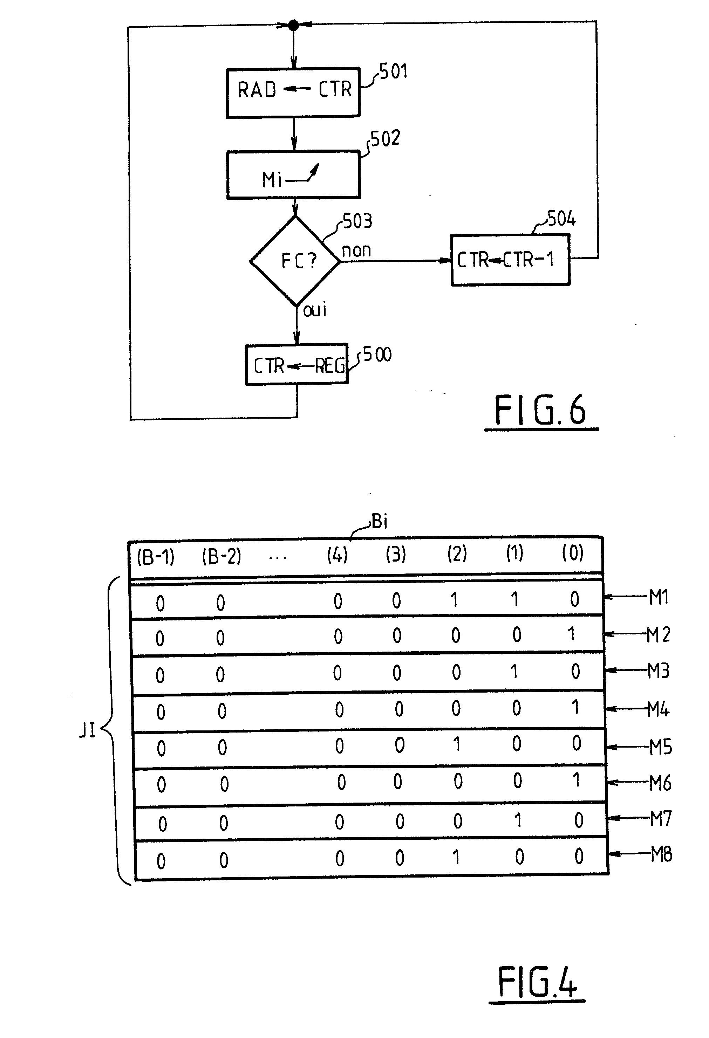

Il est maintenant fait référence aux figures 4 et suivantes pour illustrer le fonctionnement du dispositif selon l'invention.

La figure 4 illustre un exemple d'un jeu d'informations JI définissant une séquence de sept droits d'accès à la mémoire de travail MT. Ce jeu d'informations JI comprend une succession de huit mots M1 à M8 comportant un nombre B de bits, ce nombre B dépendant des caractéristiques des différents constituants du dispositif d'interface DIN ainsi que du nombre des utilisateurs. Le premier mot M1 du jeu d'informations JI définit le nombre de droits d'accès de la séquence. Ce mot M1 a ici la valeur 6, ce qui signifie bien qu'il y aura sept accès car la valeur 0 doit être prise en compte.

Les mots M2 à M8 représentent des informations de droit d'accès désignant chacune l'utilisateur autorisé à accéder à la mémoire de travail. L'identification d'un utilisateur peut se faire de deux manières : ou bien à l'aide d'une identification arithmétique par numéro ($2^B$ numéros), ou bien à l'aide d'une identification logique par masque exclusif (B utilisateurs). A titre d'exemple, on adoptera ici le mode d'identification logique. Ainsi, si le bit 1 de chaque mot est affecté à l'utilisateur UA, le bit 2 à l'utilisateur UB et le bit 3 à l'utilisateur UC, la valeur 1 pour chacun de ces bits signifie que l'utilisateur a le droit d'accéder à la mémoire, tandis que la valeur 0 signfie que l'utilisateur n'a pas le droit d'accéder à la mémoire de travail.

On voit donc que la séquence de droit d'accès, dans cet exemple, est la suivante :
- UA,UB,UA,UC,UA,UB,UC.

La figure 5 illustre un algorithme de fonctionnement du dispositif représentatif du mode chargement du jeu d'informations JI dans la mémoire d'attribution d'accès MAA. La figure 5A est une réplique de la figure 2 sur laquelle sont représentées, en trait épais, les liaisons entre les constituants valables dans ce mode de chargement.

L'étape 400 représente la réception d'un mot Mi à l'entrée de configuration EC. L'étape 401 illustre la distinction entre le premier mot de ce jeu d'informations et les mots suivants. S'il s'agit d'un premier mot, celui-ci est chargé dans le registre REG (étape 402). Dans cet exemple, le contenu du registre REG a alors la valeur 6. Dans l'étape 403, ce mot M1, donc la valeur 6, est également chargé dans le compteur CTR. La valeur de ce compteur est chargée ensuite dans le registre d'adresses RAD (étape 404) désignant ainsi la cellule d'adresse 6.

Puisqu'il ne s'agit pas manifestement de la fin du chargement de la mémoire MAA (étape 405), le deuxième mot M2 du jeu d'informations JI est présenté à l'entrée de données ED de la mémoire MAA pour être stocké dans la cellule d'adresses 6 (étape 406), c'est-à-dire la cellule désignée par la valeur courante du compteur CTR. A la suite de ce stockage, le compteur CTR est décrémenté d'une unité (étape 407) puis l'étape 404 est à nouveau réalisée, préparant ainsi le chargement futur du mot suivant dans la mémoire d'attribution d'accès.

Ainsi, à la fin du chargement, le mot M2 sera dans la cellule 6, le mot M3 dans la cellule 5, le mot M4 dans la cellule 4, le mot M5 dans la cellule 3, le mot M6 dans la cellule 2, le mot M7 dans la cellule M1 et le mot M8 dans la cellule 0.

La valeur 6 constitue pour le compteur CTR une première valeur de référence et la valeur 0 ici représente pour le compteur CTR une deuxième valeur de référence, ce compteur étant décrémenté d'une unité entre ces deux valeurs de référence. La présence de cette deuxième valeur de référence 0 dans le compteur CTR signifie ici que le chargement a été effectué, ce qui se matérialise par l'émission, par la logique de commande LC, d'un signal logique de fin de chargement FC marquant la fin de ce premier mode de fonctionnement (étape 408).

Ainsi qu'il sera expliqué ci-après, ce signal logique de fin de chargement est également un signal logique représentatif de la fin d'un cycle de décrémentation du compteur CTR.

A l'apparition de ce signal de fin de chargement, les moyens de commande vont explorer, séquentiellement et cycliquement, la mémoire d'attribution MAA, conformément à l'algorithme représenté sur la figure 6 et illustré graphiquement sur la figure 6A qui est une réplique de la figure 2 sur laquelle les traits épais représentent les liaisons effectives entre les différents constituants.

Cette exploration de la mémoire MAA, caractérisée par la valeur vraie du signal logique SXP, débute (étape 500) en forçant le compteur CTR à la première valeur de référence, donc à la valeur 6, contenue dans le registre REG. Le compteur CTR pointe alors sur le registre d'adresses RAD en désignant la cellule n° 6 (étape 501) et l'information de droit d'accès M2 contenue dans cette cellule et autorisant l'accès de l'utilisateur à la mémoire de travail MT, est présentée à la sortie SD de la mémoire d'attribution à la mémoire d'accès MAA (étape 502). Puisqu'il ne s'agit pas d'une fin de cycle de décrémentation (étape 503), le compteur est décrémenté d'une unité (étape 504) et le cycle se poursuit à partir de l'étape 501.

Lorsque le compteur atteindra sa deuxième valeur de référence, c'est-à-dire la valeur 0, il y aura émission du signal logique FC qui aura pour effet de forger à nouveau le compteur CTR à la première valeur de référence, c'est-à-dire la valeur 6 de façon à recommencer un cycle d'exploration.

Chaque information de droit d'accès reçue par la logique de commande se traduit par l'incision sur le milieu de communication USB d'un signal de droit d'accès vers l'utilisateur désigné.

On voit donc bien que l'exploration séquentielle et cyclique de la mémoire d'attribution d'accès par les moyens de commande signifie que ceux-ci explorent cette mémoire cycliquement dans le même sens que celui adopté pour le chargement. Ainsi, la séquence de droit d'accès est répétée autant de fois que nécessaire et ce, jusqu'à apparition à l'entrée de configuration d'un nouveau jeu d'informations JI définissant une autre séquence de droit d'accès et déclenchant une nouvelle procédure de chargement de la mémoire d'attribution d'accès.

De par l'utilisation d'un bus PIB synchrone, chaque utilisateur a la même référence de temps pour tous les accès à ce bus. On peut donc allouer un cycle d'accès à n'importe quel utilisateur à tout moment. La durée des accès, constante et identique, est égale à un cycle de travail du bus et permet l'échange d'un mot entre l'utilisateur et la mémoire. L'échange d'un grain complet nécessitera plusieurs cycles bus mais l'homme de l'art remarquera que le dispositif selon l'invention permet un entrelacement des différents mots échangés par les différents utilisateurs qui, de ce fait, apparaissent comme ayant accès, en parallèle et quasi-simultanément à la mémoire de travail et ce, sans conflit d'accès.

Dans le cas où un utilisateur exprime le besoin d'avoir accès en lecture et en un seul cycle-bus à un grain complet provenant de la mémoire de travail, chaque accès est consacré à l'écriture dans la mémoire-cache d'un mot du grain selon la séquence prédéterminée. La lecture de ce grain se fera alors directement à partir de la mémoire-cache lorsque celui-ci y aura été entièrement stocké.

Dans le cas où un utilisateur exprime le besoin de se libérer d'un grain complet en vue de son écriture dans la mémoire de travail, cette libération consiste en une écriture rapide de tout le grain dans la mémoire-cache puis en un échange en écriture mot par mot entre la mémoire-cache et la mémoire de travail de tous les mots du grain selon la séquence de droit d'accès prédéterminée.

Les échanges utilisateurs/mémoire-cache se font donc immédiatement grain par grain tandis que les échanges mémoire-cache/mémoire de travail se font mot à mot selon la séquence de droit d'accès.

La mémoire-cache peut être constituée également d'une liste de type PEPS ou DEPS ou circulaire, ou bien encore aléatoire. Cette mémoire-cache peut donc être gérée d'une façon analogue à celle décrite dans la Demande de brevet français au nom de la Demanderesse pour "un dispositif de mémoire vive électronique".

L'invention n'est pas limitée aux modes de réalisation ci-dessus décrits mais en embrasse toutes les variantes, notamment les suivantes :

- on a supposé que le jeu d'informations JI contenait une indication du nombre de droits d'accès de la séquence, ce qui permet au dispositif de fonctionner de façon autonome en ce qui concerne le passage du mode de chargement au mode d'exploration. Cependant, on pourrait envisager que le superviseur général, par exemple, communique une à une les informations de droit d'accès et envoie à un moment donné une information signifiant la fin du chargement. Dans un tel mode de réalisation, le registre REG pourrait ne plus être nécessaire ;

- on pourrait envisager d'autres manières de charger séquentiellement la mémoire d'attribution d'accès de façon à obtenir cet entrelacement des droits d'accès.

Bien entendu, certains des moyens décrits ci-dessus peuvent être omis dans les variantes où ils ne servent pas. Notamment, certaines mémoires-caches peuvent ne pas être implantées si l'utilisateur n'en a aucune utilité.

## Revendications

1. - Dispositif d'interface électronique entre une mémoire vive de travail (MT), possédant un port d'accès, et une pluralité d'utilisateurs (UA,UB,UC), ledit dispositif comprenant une première connexion (CN1) vers la pluralité d'utilisateurs et une deuxième connexion (CN2) vers le port d'accès, caractérisé en ce qu'il comprend, en outre :

- une mémoire d'attribution d'accès (MAA) possédant N cellules (CEL) ;

- une entrée de configuration (EC) propre à recevoir un jeu d'informations (JI) définissant une séquence d'au plus N droits d'accès à la mémoire de travail pour certains au moins des utilisateurs ; et

- des moyens de commande (MC) capables de charger la mémoire d'attribution d'accès (MAA) par la séquence de droit d'accès présente sur l'entrée de configuration, puis d'explorer ensuite, séquentiellement et cycliquement, la mémoire d'attribution d'accès en attribuant à chaque fois un droit d'accès à l'usager désigné par la cellule courante de cette mémoire d'attribution d'accès,

moyennant quoi, les utilisateurs peuvent accéder quasi-simultanément à la mémoire de travail sans conflit d'accès.

2. - Dispositif selon la revendication 1, caractérisé en ce que les première et deuxième connexions (CN1,CN2) sont prévues pour un milieu de communication synchrone (PIB) et en ce que les accès ont une durée identique et constante reliée à la période de travail du milieu de communication synchrone.

3. - Dispositif selon l'une des revendications 1 et 2, caractérisé en ce que les moyens de commande (MC) explorent cycliquement la mémoire d'attribution d'accès jusqu'à la réception d'un nouveau jeu d'informations définissant une autre séquence de droit d'accès.

4. - Dispositif selon l'une des revendications 1 à 3, risé en ce que les moyens de commande (MC) débutent l'exploration cyclique de la mémoire d'attribution d'accès en réponse à un signal logique (FC) de fin de chargement de la mémoire d'attribution d'accès.

5. - Dispositif selon l'une des revendications 1 à 4, caractérisé en ce que le début d'un nouveau cycle d'exploration est effectué en réponse à un signal logique (FC) représentatif de la fin du cycle d'exploration précédent.

6. - Dispositif selon l'une des revendications précédentes, caractérisé en ce que les moyens de commande comprennent un compteur (CTR) variant d'un pas à partir d'une première valeur de référence (M1) jusqu'à une deuxième valeur de référence (0), la différence des deux valeurs de référence étant égale au nombre N de droits d'accès, diminuée d'une unité, la valeur courante du compteur désignant la cellule courante de la mémoire d'attribution d'accès (MAA).

7. - Dispositif selon les revendications 4 à 6, caractérisé en ce que les moyens de commande (MC) comprennent une logique de commande (LC) délivrant le signal logique de fin de chargement ou le signal logique représentatif de la fin d'un cycle d'exploration, lorsque le compteur atteint sa deuxième valeur de référence.

8. - Dispositif selon l'une des revendications 6 et 7, caractérisé en ce que la séquence de droit d'accès comprend N informations de droit d'accès (M2-M8), en ce que le chargement de la séquence de droit d'accès comprend le chargement de chaque information de droit d'accès (Mi) dans la cellule courante de la mémoire d'attribution d'accès, en ce que l'attribution d'un droit d'accès à un utilisateur comprend la délivrance, par la mémoire d'attribution d'accès, de l'information de droit d'accès (Mi) contenue dans la cellule courante et en ce que la variation du compteur est effectuée après ledit chargement ou après ladite délivrance de chaque information de droit d'accès.

9. - Dispositif selon l'une des revendications 6 à 8, caractérisé en ce que, en présence du signal logique de fin de chargement, ou en présence du signal logique représentatif de la fin d'un cycle d'exploration, la logique de commande force la valeur du compteur (CTR) à la première valeur de référence.

10. - Dispositif selon la revendication 9, caractérisé en ce que le jeu d'informations comprend, en outre, une indication (M1) du nombre de droits d'accès, en ce que la première valeur de référence du compteur dépend de cette indication et, en ce que la variation du compteur est une décrémentation.

11. - Dispositif selon la revendication 10, caractérisé en ce que les moyens de commande comprennent un registre (REG) contenant ladite première valeur de référence.

12. - Dispositif selon l'une des revendications précédentes, caractérisé en ce qu'il comprend une sortie d'attribution d'accès (SAC) vers la pluralité d'utilisateurs, prévue pour un autre milieu de communication (USB) et en ce que les moyens de commande attribuent un droit d'accès à l'utilisateur désigné par l'émission d'un signal de droit d'accès sur cet autre milieu de communication (USB).

13. - Dispositif selon l'une des revendications précédentes, dans lequel la mémoire de travail est divisée en une pluralité de fragments distincts, caractérisé en ce qu'il comprend, en outre, des moyens de gestion (MG) de ces fragments, disposés entre les première et deuxième connexions.

14. - Dispositif selon la revendication 13, dans lequel la mémoire de travail est subdivisée en M fragments ayant respectivement chacun une identification, caractérisé en ce que les moyens de gestion (MG) comprennent :

- une première mémoire auxiliaire à M cellules auxiliaires ;
- un premier registre d'index propre à désigner respectivement chacune des M cellules auxiliaires, chaque index étant déterminable de façon bi-univoque à partir d'une identification ;
- un pointeur de sortie et un pointeur d'entrée parcourant le premier registre suivant une boucle fermée, de sens prédéterminé ;
- des moyens d'initialisation propres à remplir cette première mémoire auxiliaire par la suite d'identifications ainsi qu'à pré-positionner les deux pointeurs sur le même index ;
- des moyens d'attribution propres à répondre à une requête d'attribution d'un premier ensemble de p fragments, en incrémentant séquentiellement de p pas le pointeur de sortie, la sortie de la première mémoire auxiliaire délivrant séquentiellement les p identifications respectives des p fragments attribués ;
- des moyens de chaînage recevant les p identifications et chaînant les p fragments les uns aux autres, selon un ordre dépendant de la nature dudit premier ensemble ;
- des moyens d'accès propres à répondre à une requête d'accès à un deuxième ensemble de r fragments chaînés en délivrant successivement, selon l'ordre du chaînage, les r identifications successives des r fragments ;
- des moyens de libération propres à répondre à une requête de libération d'un troisième ensemble de q fragments chaînés, en désignant successivement les q identifications et en autorisant, à chaque fois, l'écriture de l'identification désignée dans la cellule auxiliaire de la première mémoire auxiliaire identifiée par l'index correspondant au pointeur d'entrée et en incrémentant ensuite le pointeur d'entrée.

15. - Dispositif selon la revendication 14, caractérisé en ce que les moyens de chaînage comprennent :
- une deuxième mémoire auxiliaire à au moins M emplacements ;
- un deuxième registre d'index propre à désigner respectivement chacun des M emplacements,
et en ce que les moyens d'attribution relient le deuxième registre d'index à la sortie de la première mémoire auxiliaire et autorisent, à partir du deuxième fragment du premier ensemble, le stockage de l'identification du fragment de rang i dans l'emplacement de la deuxième mémoire auxiliaire identifié par l'index disponible en sortie du deuxième registre d'index et correspondant à l'identification du fragment de rang i-1 .

16. - Dispositif selon l'une des revendications 14 et 15, caractérisé en ce que le premier ensemble est du type DEPS et en ce que les moyens de chaînage sont propres à effectuer un premier chaînage des p fragments destinés à être utilisés pour un travail d'écriture dans le premier ensemble et un deuxième chaînage des p fragments, inverse du premier chaînage, destiné à être utilisé pour un travail de lecture dans le premier ensemble.

17 - Dispositif selon l'une des revendications précédentes, dans lequel au moins un utilisateur (UA) comprend une mémoire-cache (MCHA), caractérisé en ce que la durée d'accès de cet utilisateur à la mémoire de travail est consacrée à l'écriture et/ou à la lecture dans la mémoire-cache (MCHA).

FIG.1

FIG.2

EP 0 349 427 A1

## FIG.3

## FIG.5

FIG.5A

RAD ← CTR /501

Mi —/ /502

FC? /503  non ──→ CTR←CTR-1 /504

oui

CTR←REG /500

## FIG.6

| (B-1) | (B-2) | ... | (4) | (3) | (2) | (1) | (0) | |
|-------|-------|-----|-----|-----|-----|-----|-----|------|
| 0 | 0 | | 0 | 0 | 1 | 1 | 0 | ←—M1 |
| 0 | 0 | | 0 | 0 | 0 | 0 | 1 | ←—M2 |
| 0 | 0 | | 0 | 0 | 0 | 1 | 0 | ←—M3 |
| 0 | 0 | | 0 | 0 | 0 | 0 | 1 | ←—M4 |
| 0 | 0 | | 0 | 0 | 1 | 0 | 0 | ←—M5 |
| 0 | 0 | | 0 | 0 | 0 | 0 | 1 | ←—M6 |
| 0 | 0 | | 0 | 0 | 0 | 1 | 0 | ←—M7 |
| 0 | 0 | | 0 | 0 | 1 | 0 | 0 | ←—M8 |

Bi

JI

## FIG.4

Office européen
des brevets

**RAPPORT DE RECHERCHE EUROPEENNE**

Numero de la demande

EP  89 40 1855

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 600 988  (TENDULKAR et al.)<br>* Colonne 2, lignes 11-20; colonne 4, lignes 31-52; figure 1 * | 1-3 | G 06 F  13/36 |
| A | | 4-6,9-12 | |
| | --- | | |
| X | WO-A-8 000 883  (SMITT)<br>* Page 3, lignes 23-28; page 5, ligne 28 - page 6, ligne 25; figure 1 * | 1-3 | |
| A | | 4-8,11 | |
| | --- | | |
| A | EP-A-0 153 877  (FUJITSU LTD)<br>* Figures 9,12; page 1, ligne 1 - page 3, ligne 12; page 21, ligne 17 - page 23, ligne 30; page 25, ligne 18 - page 27, ligne 20 * | 13-17 | |
| | ----- | | |

DOMAINES TECHNIQUES
RECHERCHES (Int. Cl.5)

G 06 F  13/36
G 06 F  12/14

Le présent rapport a été établi pour toutes les revendications

| Lieu de la recherche | Date d'achèvement de la recherche | Examinateur |
|---|---|---|
| LA HAYE | 05-10-1989 | NGUYEN XUAN HIEP C. |